# EUROPÄISCHE PATENTSCHRIFT

(11) **EP 3 639 710 B1**
(45) Veröffentlichungstag und Bekanntmachung des Hinweises auf die Patenterteilung: **16.08.2023**
(21) Anmeldenummer: 19203403.1
(22) Anmeldetag: 15.10.2019
(51) Int. Cl.: A47J 36/06, A47J 27/58, A47J 37/10

(54) **SPRITZSCHUTZ FÜR EINE PFANNE ODER EINEN KOCHTOPF SOWIE SPRITZSCHUTZSET**
SPRAY GUARD FOR A PAN OR A COOKING POT AND A SPRAY GUARD SET
PROTECTION ANTI-PROJECTIONS POUR UN RÉCIPIENT DE CUISSON AINSI QU'ENSEMBLE DE PROTECTION ANTI-PROJECTIONS

(30) Priorität: 15.10.2018 DE 102018125480
(43) Veröffentlichungstag der Anmeldung: 22.04.2020
(73) Patentinhaber: Schulze & Schulze GmbH, 78054 Villingen-Schwenningen (DE)
(72) Erfinder: SCHULZE, Ebru, 78054 Villingen-Schwenningen (DE)
(74) Vertreter: Patentanwälte Bauer Vorberg Kayser

(56) Entgegenhaltungen:
- EP-A1- 0 115 561
- CA-A1- 2 150 331
- US-A- 4 157 707
- US-A1- 2015 104 555
- Anonymous: "Gusseisen Fondue-Set GRENOBLE schwarz, Ø 15,5 cm mit 8 Fonduegabeln: Amazon.de: Küche & Haushalt", , 6 December 2018 (2018-12-06), XP055802463, Retrieved from the Internet: URL:https://www.amazon.de/Spring-Fondue-Ga rnitur-Grenoble-schwarz/dp/B07L6B8KXX?th=1 [retrieved on 2021-05-07]

## Beschreibung

Die vorliegende Erfindung betrifft einen Spritzschutz für eine Pfanne oder einen Kochtopf mit den Merkmalen des Patentanspruchs 1 sowie ein Spritzschutzset mit den Merkmalen des Patentanspruchs 10.

Aus dem Stand der Technik sind Spritzschutze für Pfannen oder Töpfe in unterschiedlichen Ausgestaltungen vorbekannt. Typischerweise sind die aus dem Stand der Technik bekannten Spritzschutze plattenförmig ausgebildet und umfassen eine Vielzahl von Öffnungen durch die Luft, Feuchtigkeit, insbesondere Bratdämpfe die Pfanne oder den Kochtopf verlassen können und größere Spritzer, insbesondere Fettspritzer auf der der Pfanne oder dem Kochtopf zugewandten Seite, zurückgehalten werden. Derartige Spritzschutze sind typischerweise entweder aus einem feinmaschigen Sieb mit einem Halterahmen gebildet oder als plattenförmiges Kunststoffteil mit einer Vielzahl von Durchgangsbohrungen.

Nachteilig an diesem Stand der Technik hat sich erwiesen, dass die aus dem Stand der Technik bekannten Spritzschutze die Öffnung der Pfanne oder des Kochtopfes der Art versperren, dass Bratdämpfe nur gegen einen erhöhten Druckwiderstand durch den Spritzschutz strömen können und der Abtransport von Feuchtigkeit reduziert ist. Die verbleibende Feuchtigkeit beeinflusst das Bratergebnis oftmals negativ. Darüber hinaus verhindern die aus dem Stand der Technik bekannten Spritzschutze eine physische Zugänglichkeit der Brat- oder Kochfläche der Pfanne oder des Kochtopfes, wodurch zum Wenden des zu bratenden Lebensmittels, insbesondere Fleisch, zum Würzen oder zum Hinzufügen weiterer Lebensmittel der Spritzschutz entfernt werden muss. Insbesondere beim Hinzufügen von feuchten Lebensmitteln, beispielsweise Gemüse, führen Wasserrückstände zu einem verstärkten Spritzen, welches dann jedoch nicht von dem Spritzschutz zurückgehalten wird.

Ein gattungsgemäßer Spritzschutz gemäß des Oberbegriffs des Anspruchs 1 ist beispielsweise aus EP0115561A1 bekannt.

Hier setzt die vorliegende Erfindung an.

Die Aufgabe der vorliegenden Erfindung ist es, einen verbesserten Spritzschutz für Pfannen oder Kochtöpfe bereitzustellen, der die Nachteile der aus dem Stand der Technik bekannten Spritzschutze beseitigt. Darüber hinaus ist es die Aufgabe der vorliegenden Erfindung, einen Spritzschutz zur Verfügung zu stellen, der zuverlässig beim Braten oder Kochen das Austreten von Spritzern verhindert, feuchtigkeitsgesättigte Bratdämpfe ungehindert austreten lässt, und dass Zufügen von Gewürzen, Lebensmitteln oder dergleichen beim Braten ermöglicht, ohne dass der Spritzschutz von der Pfanne oder dem Kochtopf entfernt werden muss. Darüber hinaus soll es beim Braten oder Kochen möglich sein, das Lebensmittel in dem Kochtopf umzurühren oder zu wenden, ohne dass der Spritzschutz von der Pfanne oder dem Kochtopf entfernt werden muss. Weiterhin soll der Spritzschutz kostengünstig und vielseitig auch an unterschiedlichen Pfannendurchmessern zur Anwendung kommen können, kostengünstig in der Herstellung sein, einfach zu reinigen und sicher bei der Anwendung sein. Auch soll der Spritzschutz einfach in der Pfanne oder dem Kochtopf lagerbar sein.

Diese Aufgaben werden durch einen Spritzschutz mit den Merkmalen des Patentanspruchs 1 sowie mit einem Spritzschutzset mit den Merkmalen des Patentanspruchs 10 gelöst.

Weitere vorteilhafte Ausgestaltungen der Erfindung werden in den Unteransprüchen angegeben.

Der erfindungsgemäße Spritzschutz für eine Pfanne oder einen Kochtopf mit den Merkmalen des Anspruchs 1 umfasst einen eine Öffnung umschließenden umlaufenden Rand mit wenigstens einer Auflage auf einer ersten Seite, wenigstens einen Seitenanschlag, der von der ersten Seite des umlaufenden Randes entlang einer Längsachse absteht und eine kuppelförmige Schutzlippe, die sich von einer zweiten Seite von der Öffnung in der Längsachse bis zu einer Kochöffnung erstreckt und ist dadurch gekennzeichnet, dass die kuppelförmige Schutzlippe an einem freien Ende wenigstens eine Auflagerille umfasst, wobei die Auflagerille als teilkreisförmige Ausnehmung am freien Ende der kuppelförmigen Schutzlippe ausgeformt ist, wobei der umlaufende Rand von einem Übergangsbereich radial von der Längsachse und der Schutzlippe absteht und am abstehenden Ende einen umlaufenden Rand zur Bildung einer Auffangrinne aufweist, und wobei der Seitenanschlag zur Zentrierung des Spritzschutzes auf der Pfanne oder dem Kochtopf keilförmig ausgebildet ist. Erfindungsgemäß ist dabei vorgesehen, dass der Spritzschutz als ein einteiliger Körper ausgebildet ist, wobei der Spritzschutz mit seiner Auflage auf der ersten Seite auf einen Rand der Pfanne oder des Kochtopfs aufgesetzt werden kann und die Seitenanschläge ein Verrutschen von dem Rand der Pfanne oder des Kochtopfs verhindern. Die kuppelförmige Schutzlippe steht dabei auf der von der Pfanne oder dem Kochtopf abgewandten Seite des umlaufenden Randes ab und weist bevorzugt mittig in der Längsachse eine Kochöffnung auf, durch die feuchtigkeitsgesättigte Dämpfe ungehindert austreten können und Gewürze, weitere Lebensmittel zum Braten oder Kochen in die Pfanne oder den Kochtopf auf die Brat- oder Kochfläche zugeführt werden können. Durch entsprechende Formgebung des Spritzschutzes kann dieser zur Lagerung umgedreht in der Pfanne oder dem Topf platzsparend verstaut werden. Die kuppelförmige Schutzlippe umfasst an einem freien Ende wenigstens eine Ablage. Die Ablage kann als rillenförmige Ausnehmung in das freie Ende der Schutzlippe eingeformt sein und ist benachbart zu der Kochöffnung angeordnet. Die Auflage kann für einen oder mehrere Küchenhelfer, beispielsweise einen Pfannenwender, einen Kochlöffel, eine Bratzange, eine Gabel oder dergleichen verwendet werden. Die Auflagerille ist als teilkreisförmige Ausnehmung am freien Ende der kuppelförmigen Schutzlippe ausgeformt und verhindert ein Wegrollen des mindestens einen auf der Auflage abgelegten Küchenhelfers. Weiterhin ist insbesondere bevorzugt, wenn mehrere Auflagen vorgesehen sind, insbesondere wenn die mehreren Auflagen an diametral gegenüberliegenden Seiten des Spritzschutzes angeordnet sind.

Darüber hinaus ist es vorteilhaft, wenn der Seitenanschlag aus wenigstens einem Einzelanschlag, vorzugsweise drei Einzelanschlägen gebildet ist. Insbesondere ist es vorteilhaft, wenn der Seitenanschlag um die Längsachse als umlaufender und ringförmiger Einzelanschlag ausgebildet ist, wodurch der Seitenanschlag eine zusätzlich Dichtwirkung an dem Pfannen- oder Kochtopfrand zusammen mit der Auflage bildet.

Erfindungsgemäß ist der Seitenanschlag keilförmig gebildet. Der keilförmige Seitenanschlag weist auf der von der Längsachse abgewandten Seite wenigstens eine zulaufende Fläche auf, die sich zum freien Ende hin verjüngt. Durch die zulaufende Fläche erfolgt eine Zentrierung des Spritzschutzes auf der Pfanne oder dem Kochtopf, bzw. an dem Pfannen- oder Kochtopfrand.

Erfindungsgemäß ist es vorteilhaft, dass der umlaufende Rand ausgehend von einem Übergangsbereich radial von der Längsachse und der Schutzlippe absteht und an dem abstehenden freien Ende einen in der Längsachse abstehenden Steg zur Bildung einer Auffangrinne aufweist. Die Auffangrinne kann auskondensierte Flüssigkeiten, die von der Kochöffnung an der kuppelförmigen Schutzlippe ablaufen, auffangen und so verhindern, dass diese Flüssigkeiten auf die Kochfläche gelangen und dort ansetzen bzw. anbrennen. Auch kann die Auffangrinne Rückstände des Lebensmittels von einem Pfannenwender, einem Kochlöffel, einer Bratzange, einer Gabel oder dergleichen auffangen, die auf dem Spritzschutz abgelegt werden können. Darüber hinaus kann alternativ oder ergänzend eine Auffangrinne auf der der Längsachse zugewandten Seite der kuppelförmigen Schutzlippe angeordnet sein, um an der der Pfanne oder dem Kochtopf zugewandten Seite der Schutzlippe auskondensierende Flüssigkeiten am Zurücklaufen bzw. Zurücktropfen in die Pfanne oder den Kochtopf zu hindern.

Insbesondere hat es sich dabei als vorteilhaft erwiesen, wenn die Auffangrinne wenigstens eine Durchgangsbohrung aufweist, und die wenigstens eine Durchgangsbohrung auf der der Pfanne zugewandten Seite des Spritzschutzes derart mündet, dass in der Auffangrinne befindliche Flüssigkeiten in die Pfanne zurückfließen können. Dabei weist besonders bevorzugt die Durchgangsbohrung eine Neigung auf, die ein Abfließen der sich in der Auffangrinne befindenden Flüssigkeit begünstigt.

Nach Maßgabe einer weiteren vorteilhaften Ausgestaltung steht die kuppelförmige Schutzlippe ca. 2,5 cm von dem zweiten Ende des umlaufenden Rand ab, wobei höher abstehende Schutzlippen eine bessere Spritzschutzwirkung entfalten, jedoch die Zugänglichkeit der Bratfläche bzw. Kochfläche der Pfanne bzw. des Kochtopfs verschlechtern. Insbesondere hat es sich weiterhin als vorteilhaft erwiesen, wenn die Öffnung, die in einer Ebene mit dem umlaufenden Rand geordnet ist, größer ist als die Fläche der Kochöffnung, wobei besonders bevorzugt die Fläche der Kochöffnung maximal 50% kleiner ist als die Öffnung. Je kleiner die Kochöffnung im Verhältnis zu der Öffnung ist, desto besser ist die Spritzschutzwirkung des erfindungsgemäßen Spritzschutzes, jedoch wird die Zugänglichkeit der Bratfläche bzw. der Kochfläche der Pfanne bzw. des Kochtopfes reduziert. Besonders vorteilhaft ist, wenn der Radius der Kochöffnung ca. 2,5 cm kleiner ist als der Radius der Öffnung.

Vorteilhaft ist es, wenn der wenigstens eine Seitenanschlag auf einen Pfannendurchmesser von 20 cm, 22 cm, 24 cm, 26 cm, 28 cm oder auch für deutlich größere Pfannen bzw. Kochtöpfe angepasst ist, wobei der Spritzschutz ebenfalls für Pfannen oder Kochtöpfe mit kleineren Durchmessern, beispielsweise 16-20 cm angepasst sein kann. Insbesondere ist erfindungsgemäß vorgesehen, dass der Spritzschutz in einem Spritzschutzset für unterschiedliche Pfannendurchmesser bzw. Topfdurchmesser angeboten wird. Insbesondere ist dabei vorteilhaft, wenn das jeweilige Spritzschutzset mindestens zwei Spritzschutze umfasst, wobei der erste Spritzschutz und der zweite Spritzschutz für unterschiedliche Pfannendurchmesser bzw. Topfdurchmesser angepasst sind, wodurch erfindungsgemäß die Spritzschutze des Spritzschutzsets platzsparend stapelbar sind.

Eine weitere vorteilhafte Ausgestaltung der vorliegenden Erfindung sieht vor, dass der Spritzschutz ein geschlitzter Ring mit einem ersten Ende und einem zweiten Ende ist, wobei dem ersten Ende und dem zweiten Ende des geschlitzten Rings jeweils ein Befestigungsmittel zugeordnet ist, und wobei durch die Befestigungsmittel der Spritzschutz an mindestens zwei unterschiedliche Pfannendurchmesser bzw. Topfdurchmesser anpassbar ist. Das erste Ende und das zweite Ende können ineinander gesteckt werden und mittels der Befestigungsmittel kann der so eingestellte Pfannen- oder Topfdurchmesser arretiert werden. Insbesondere haben sich lösbare formschlüssige oder kraftschlüssige Befestigungsmittel beispielsweise eine Lasche und eine Schnalle, eine Rastverbindung, eine Klemmverbindung oder dergleichen als vorteilhaft erwiesen. Insbesondere ist erfindungsgemäß vorgesehen, dass ebenfalls ein Spritzschutzset mit mindestens zwei Spritzschutzen vorgesehen ist, wobei mindestens einer der Spritzschutze als ein geschlitzter Ring ausgebildet sein kann.

Insbesondere hat es sich als vorteilhaft erwiesen, wenn der Spritzschutz wenigstens einen Griff aufweist. Bevorzugt ist der wenigstens eine Griff auf der von der Pfanne oder dem Kochtopf abgewandten Seite des umlaufenden Randes, der kuppelförmigen Schutzlippe und/oder der Auffangrinne angeordnet. Auch kann der Spritzschutz einen Henkel oder eine Aufhängeöse oder dergleichen aufweisen, wodurch sowohl die Handhabung als auch die Lagerung des Spritzschutzes vereinfacht ist.

Gemäß einer weiteren vorteilhaften Ausgestaltung der Erfindung ist der Spritzschutz aus Silikon, Kunststoff, Metall, Glas, Glaskeramik, Holz, Holz-Kunststoff-Gemischen (WPC), Keramik, insbesondere Steingut hergestellt. Insbesondere eignen sich als Kunststoffwerkstoffe Silikone, PEEK, PTE, PPA, insbesondere Grivory-HT^{®}.

Nach einer weiteren Maßgabe der vorliegenden Erfindung kann es vorteilhaft sein, wenn der umlaufende Rand und/oder der Seitenanschlag aus einem ersten Werkstoff hergestellt ist bzw. sind und die Schutzlippe aus wenigstens einem zweiten Werkstoff. Insbesondere hat es sich dabei als vorteilhaft erwiesen, wenn der erste Werkstoff eine höhere Temperaturbeständigkeit aufweist als der zweite Werkstoff. Auch hat es sich als vorteilhaft erwiesen, wenn der zweite Werkstoff ein weicherer Werkstoff ist als der erste Werkstoff, wodurch die kuppelförmige Schutzlippe leichtgängig elastisch verformbar ist. Dadurch kann beispielsweise bei der Verwendung eines Pfannenwenders die Zugänglichkeit zur Brat- oder Kochfläche verbessert werden, da die Schutzlippe um die Kochöffnung elastisch verformbar ausweichen kann. Insbesondere bei der Verwendung eines Pfannenwenders kann auch unter Verwendung des Spritzschutzes der Küchenhelfer in dem optimalen Eingriffswinkel zu der Kochfläche bzw. Bratfläche geführt werden.

Vorteilhaft ist es, wenn der Spritzschutz einen Deckel umfasst, der die Kochöffnung verschließen kann. Der Deckel ist bevorzugt verrutschsicher auf den Spritzschutz aufsetzbar bzw. in die Kochöffnung einsetzbar. Insbesondere ist bevorzugt, wenn der Deckel derart ausgebildet ist, dass dieser in der Kochöffnung beweglich, insbesondere in der Längsachse verdrehbar auf dieser angeordnet werden kann. Durch ein Verdrehen um die Längsachse kann der Deckel mit der mindestens einen Auflagerille derart in Verbindung gebracht werden, das Dampf ungehindert durch die Auflagerille austreten kann.

Ein weiterer Aspekt der vorliegenden Erfindung betrifft ein Spritzschutzset. Insbesondere ist es vorteilhaft, wenn der erste Spritzschutz und der wenigstens eine zweite Spritzschutz stapelbar sind, wodurch das Spritzschutzset platzsparend aufbewahrt werden kann.

Nachfolgend wird unter Bezugnahme auf die begleitenden Zeichnungen ein erfindungsgemäßes Ausführungsbeispiel beschrieben. Es zeigen:
- Figur 1: eine perspektivische Ansicht des erfindungsgemäßen Spritzschutzes, aufweisend einen umlaufenden Rand mit wenigstens einer Auflage und einer an dem umlaufenden Rand abstehenden kuppelförmigen Schutzlippe,
- Figur 2: eine teilweise geschnittene Seitenansicht des Spritzschutzes gemäß Figur 1,
- Figur 3: eine Draufsicht auf den Spritzschutz gemäß Figur 1,
- Figur 4: eine geschnittene Darstellung eines Spritzschutzsets umfassend zwei Spritzschutze für unterschiedliche Pfannen- oder Kochtopfdurchmesser, und
- Figur 5: eine Seitenansicht einer alternativen Ausgestaltungsform eines Spritzschutzes gemäß der vorliegenden Anmeldung.

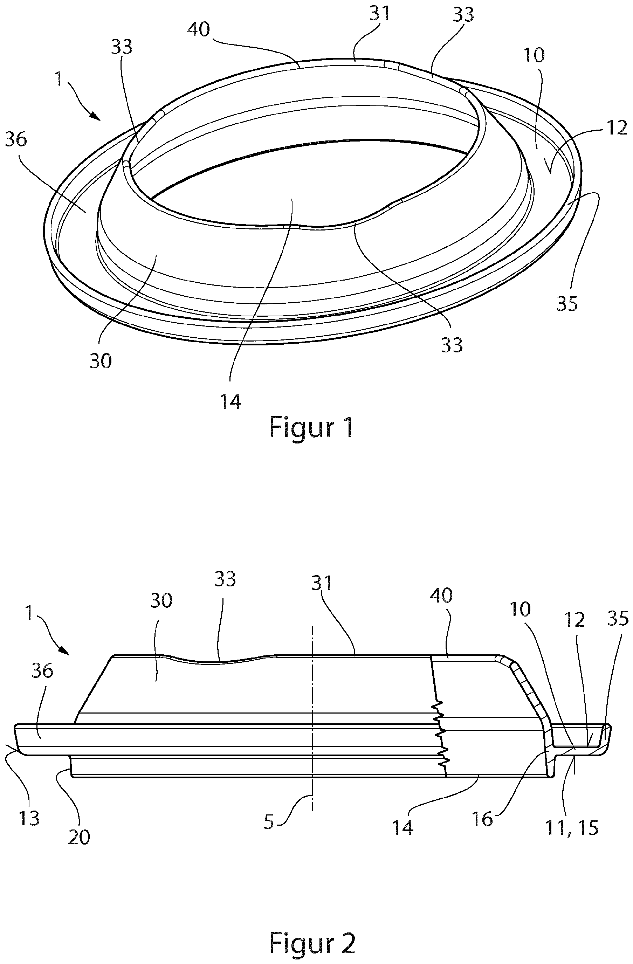

Figur 1 zeigt eine perspektivische Ansicht eines erfindungsgemäßen Spritzschutzes 1, der ringförmig und einstückig um eine Längsachse 5 im Wesentlichen rotationssymmetrisch ausgebildet ist. Der Spritzschutz 1 umfasst, wie der geschnittenen Darstellung in Figur 2 im Detail zu entnehmen ist, einen umlaufenden Rand 10 mit einer ersten Seite 11 und einer zweiten Seite 12, wobei die erste Seite 11 auf der einer (nicht dargestellten) Pfanne oder einem (nicht dargestellten) Kochtopf zugewandten Seite angeordnet ist. Der umlaufende Rand 10 umschließt dabei eine Öffnung 14.

Der Spritzschutz 1 kann an die Geometrie der Pfanne oder des Kochtopfs angepasst sein, kann aber neben der um die Längsachse 5 kreisrunden Ausgestaltung auch andere Formen aufweisen, beispielsweise eine rechteckige, mehreckige oder ovale Form.

Der Spritzschutz 1 kann weiterhin bei der Zubereitung von Lebensmitteln in einem Ofen oder einer Mikrowelle zum Einsatz kommen.

Die erste Seite 11 bildet eine Auflage 15, mit welcher der Spritzschutz 1 auf die Wandung der Pfanne oder des Kochtopfs aufgelegt bzw. aufgesetzt werden kann. Von der ersten Seite 11 steht in der Längsachse 5 ein Seitenanschlag 20 ab, welcher sich als umlaufender Ring um die Längsachse 5 über den gesamten Umfang erstreckt. Der Seitenanschlag 20 ist dazu eingerichtet, in der Längsachse 5 in die Pfanne oder den Kochtopf hineinzuragen und ein seitliches Verrutschen des Spritzschutzes 1 auf der Pfanne oder dem Kochtopf zu verhindern. Der Seitenanschlag 1 kann keilförmig ausgebildet sein, wodurch dieser in der Längsachse eine zulaufende Form aufweist, welche sich ausgehend von der Auflage 15 verjüngt, wodurch eine verbesserte Abdichtung und Zentrierung an der Wandung der Pfanne oder dem Kochtopf erfolgt.

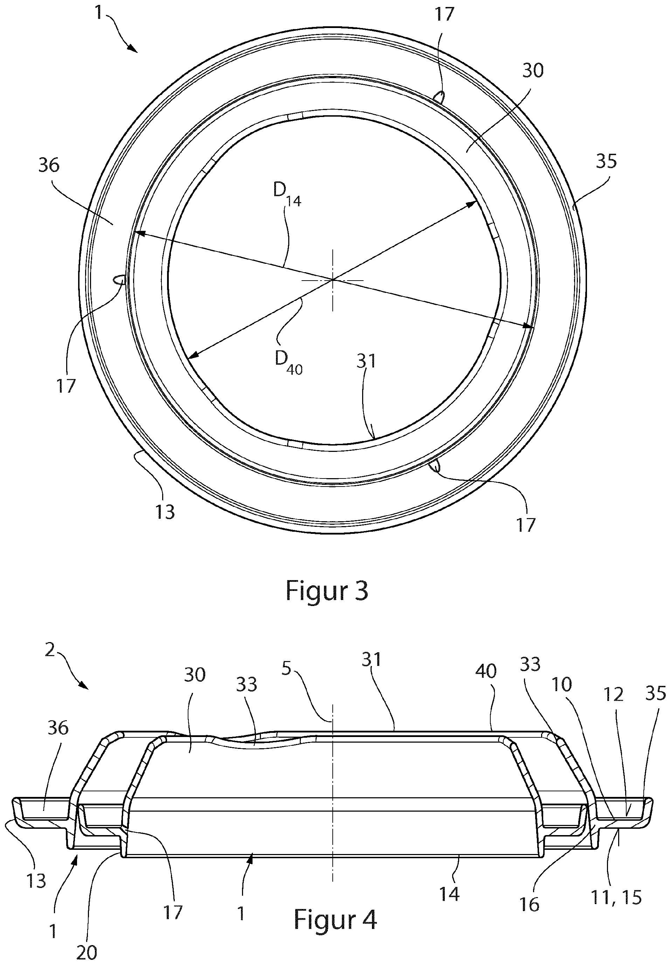

Auf der zweiten Seite 12 des umlaufenden Randes 10 ist eine kuppelförmige Schutzlippe 30 angeformt oder angearbeitet, welche in der Längsachse 5 von der von dem Seitenanschlag 20 abgewandten Seite absteht. Die Schutzlippe 30 erstreckt sich von der Öffnung 14 bis zu einer Kochöffnung 40, wobei die kuppelförmige Schutzlippe 30 eine sich stetig senkrecht zu der Längsachse 5 verringernde Querschnittsfläche aufweist, so dass die senkrecht zu der Längsachse 5 umschlossene Fläche der Kochöffnung 40 mit einem Durchmesser D₄₀, siehe Figur 3, kleiner ist als die Fläche der Öffnung 14 mit einem Durchmesser D₁₄.

An einem von der Längsachse 5 abgewandten freien Ende 13 kann in einer bevorzugten Ausgestaltung des Spritzschutzes 1 ein umlaufender Steg 35 ausgebildet sein, der von der zweiten Seite 12 in der Längsachse 5 von dem umlaufenden Rand 10 absteht und eine Auffangrinne 36 bildet. Die Auffangrinne 36 kann auskondensierte Dämpfe, welche sich an der von der Pfanne oder dem Kochtopf abgewandten Seite der kuppelförmigen Schutzlippe 30 ablegen und herunterlaufen, auffangen und so das Anbrennen der auskondensierten Dämpfe an einem Herd verhindern.

An dem freien Ende 31 der kuppelförmigen Schutzlippe 30, welches die Kochöffnung 40 bildet, ist in dem Umfang um die Längsachse 53 mindestens eine Auflage 33 ausgebildet, die an dem freien Ende 31 in der Längsachse eine kleine lokale Senke ausbildet, in die eine (nicht dargestellte) Kochhilfe, beispielsweise ein Pfannenwender, ein Kochlöffel oder dergleichen, abgelegt werden kann, ohne dass die Gefahr besteht, dass die Kochhilfe wegrutscht oder wegrollt und möglicherweise in die Pfanne oder den Kochtopf fällt. Insbesondere der in Figur 3 gezeigten Draufsicht auf den Spritzschutz 1 ist zu entnehmen, dass drei Auflagen 33 um die Längsachse 5 symmetrisch in einer Winkelteilung von 120° angeordnet sind, wobei die Anzahl und die Anordnung der Auflagen 33 um die Längsachse 5 an dem freien Ende 31 beliebig erfolgen kann.

Weiterhin ist den Figuren 3 und 4 zu entnehmen, dass in einem Übergangsbereich 17 zwischen dem umlaufenden Rand 10, bzw. der Auffangrinne und der kuppelförmigen Schutzlippe 30 mehrere Durchgangsbohrungen 17 angeordnet ist, die auf die der Pfanne oder dem Kochtopf zugewandten Seite münden. Die Durchgangsbohrungen sind, wie aus Figur 4 ersichtlich ist, in einem geneigten Winkel zu der Längsachse 5 in den Spritzschutz 1 eingebracht, wodurch das Abfließen von einer sich in der Auffangrinne 35 befindlichen Flüssigkeit zu der der Pfanne oder dem Kochtopf zugewandten Seite des Spritzschutzes 1 begünstigt ist.

Um eine gute Zugänglichkeit zu einer (nicht dargestellten) Brat- oder Kochfläche einer Bratpfanne oder eines Kochtopfs zu gewährleisten, sollte die Schutzlippe 30 nicht allzu weit von der Öffnung 14 beabstandet sein. In einem bevorzugten Ausführungsbeispiel steht die kuppelförmige Schutzlippe 30 in der Längsachse 5 ca. 2,5 cm von dem umlaufenden Rand 10 ab, wobei bei größeren Pfannen- oder Kochtopfdurchmessern die kuppelförmige Schutzlippe 30 auch weiter von dem umlaufenden Rand 10 abstehen kann und vice versa.

Darüber hinaus ist das Verhältnis zwischen den Abmessungen der Öffnung 14 und der Kochöffnung 40 ebenfalls maßgeblich für die Zugänglichkeit der Brat- oder Kochfläche. Bevorzugt ragt die kuppelförmige Schutzlippe 30 ca. 2,5 cm in Richtung der Längsachse 5, wobei weiter bevorzugt die Fläche der Kochöffnung 40 nicht kleiner sein sollte als 50 % der Öffnung 14. Insbesondere das Flächenverhältnis zwischen der Kochöffnung 40 und der Öffnung 14 beeinflusst das Bratergebnis. Je kleiner die Kochöffnung 40 ist, desto besser ist zwar der Schutz gegen unerwünschte Spritzer auf der Pfanne oder dem Kochtopf, jedoch können feuchtigkeitsgesättigte Dämpfe nur eingeschränkt abziehen. Durch die Kochöffnung 40 sollen nicht dargestellte Küchenhelfer wie z.B. Pfannenwender, Kochlöffel, Bratzange, Gabel oder dergleichen in den Topf oder die Pfanne zum Wenden des Lebensmittels zur Anwendung kommen können. So kann beispielsweise mittels einer Grillzange beim Braten das Fleisch in der Pfanne gewendet werden.

Der Spritzschutz 1 kann als ein Spritzschutzset 2, wie in Figur 4 dargestellt ist, platzsparend gestapelt werden, wobei das Spritzschutzset 2 wenigstens einen ersten Spritzschutz 1 und einen zweiten Spritzschutz 2 umfasst, welche an unterschiedliche Pfannengrößen bzw. Topfgrößen angepasst sind. Darüber hinaus können die Spritzschutze 1 aus unterschiedlichen Werkstoffen hergestellt sein, wobei bevorzugt die Spritzschutze 1 eines Spritzschutzsets 2 aus demselben Werkstoff bzw. derselben Werkstoffkombinationen hergestellt sind.

Der Spritzschutz 1 kann aus einem Werkstoff oder aus einer Kombination mehrerer Werkstoffe hergestellt sein, wobei im Sinne dieser Erfindung alle Werkstoffe umfasst sind, die eine ausreichende Temperaturfestigkeit und Lebensmittelverträglichkeit aufweisen. Bevorzugt kommen Metalle, Glas, Glaskeramik, Keramik, insbesondere Steingut, oder Kunststoffe zum Einsatz. Als Kunststoffe haben sich PEEK, PTFE und PPA-Werkstoffe bewährt, wobei sich besonders hitzeresistente PPA-Werkstoffe wie Grivory^{®}-HT bewährt haben. Auch kann Holz als Werkstoff verwendet werden. Holzähnliche Werkstoffe z.B. Bio-Kunststoff oder Kunststoff mit Holzfaseranteilen, insbesondere WPC (Wood-Polymer-Composites) können ebenfalls verwendet werden und erweitern die gestalterischen Möglichkeiten.

Der Spritzschutz 1 kann einstückig aus einem Werkstoff hergestellt sein oder aus einer Werkstoffkombination aus mindestens zwei unterschiedlichen Werkstoffen. Dabei kann es sich anbieten, den wenigstens einen Seitenanschlag 20 sowie den umlaufenden Rand 10, also die mit der heißen Pfanne oder dem heißen Kochtopf in Kontakt kommenden Abschnitte aus einem temperaturbeständigen Werkstoff herzustellen, während dessen die kuppelförmige Schutzlippe 30 aus einem weniger temperaturbeständigen Werkstoff hergestellt sein kann. Auch kann es vorteilhaft sein, die kuppelförmige Schutzlippe 30 aus einem weichen Werkstoff, beispielsweise einem Silikonwerkstoff, herzustellen, um die Handhabung zu erleichtern.

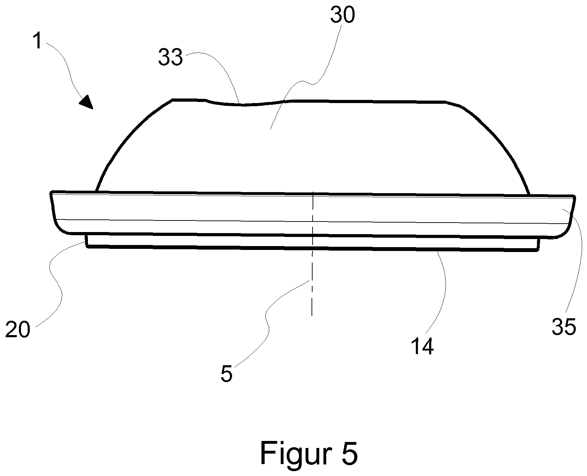

Figur 5 zeigt eine alternative Ausgestaltungsform eines Spritzschutzes 1 gemäß der vorliegenden Anmeldung. Der Spritzschutz 1 gemäß Figur 5 entspricht technisch dem in den Figuren 1 und 2 dargestellten Spritzschutz 1, und ist ebenfalls ringförmig und einstückig um eine Längsachse 5 im Wesentlichen rotationssymmetrisch ausgebildet.

Die Schutzlippe 30 erstreckt sich von der Öffnung 14 bis zu der Kochöffnung 40, wobei die kuppelförmige Schutzlippe 30 eine sich stetig senkrecht zu der Längsachse 5 verringernde Querschnittsfläche aufweist und in der dargestellten Seitenansicht eine konvexe Außenkontur aufweist. Durch die konvexe Ausgestaltung läuft sich an der Innenseite der Schutzlippe 30 niederschlagendes Kondensat von dem Bratvorgang besser ab und sammelt sich in dem Bratgefäß wieder.

Die übrigen Merkmale des in Figur 5 dargestellten Spritzschutzes 1 entsprechen denen des Spritzschutzes 1, wie er in den Figuren 1 bis 3 dargestellt wurde. Ferner kann auch mit der Ausgestaltung gemäß Figur 5 ein Spritzschutzset 2, mit Spritzschutzen 1 mit unterschiedlichen Durchmessern, wie es in Figur 4 dargestellt ist, gebildet werden.

### Bezugszeichenliste

- 1: Spritzschutz
- 2: Spritzschutzset
- 5: Längsachse
- 10: Rand
- 11: erste Seite
- 12: zweite Seite
- 13: Ende
- 14: Öffnung
- 15: Auflage
- 16: Übergangsbereich
- 17: Durchgangsbohrung
- 20: Seitenanschlag
- 25: Ansatz
- 30: Schutzlippe
- 31: Ende
- 33: Auflagerille
- 35: Rand
- 40: Kochöffnung

## Patentansprüche

1. Spritzschutz (1) für eine Pfanne oder einen Kochtopf aufweisend:
- einen eine Öffnung (14) umlaufenden Rand (10) mit wenigstens einer Auflage (15) auf einer ersten Seite (11),
- wenigstens einen Seitenanschlag (20), der von einer ersten Seite (11) des umlaufenden Randes (10) in einer Längsachse (5) absteht, und
- eine umlaufende kuppelförmige Schutzlippe (30), die sich von einer zweiten Seite (12) von dem umlaufenden Rand (10) in der Längsachse (5) bis zu einer Kochöffnung (40) erstreckt, wobei der umlaufende Rand von einem Übergangsbereich radial von der Längsachse und der Schutzlippe absteht und am abstehenden Ende einen umlaufenden Rand zur Bildung einer Auffangrinne aufweist,
**dadurch gekennzeichnet, dass** die kuppelförmige Schutzlippe (30) an einem freien Ende (31) wenigstens eine Auflagerille (33) umfasst, wobei die Auflagerille (33) als teilkreisförmige Ausnehmung am freien Ende der kuppelförmigen Schutzlippe (30) ausgeformt ist, und dadurch, dass
der Seitenanschlag (20) zur Zentrierung des Spritzschutzes (1) auf der Pfanne oder dem Kochtopf keilförmig ausgebildet ist.

2. Spritzschutz (1) nach Anspruch 1,
**dadurch gekennzeichnet, dass** der Seitenanschlag (20) aus wenigstens drei Einzelanschlägen (20) gebildet ist, oder dass der Seitenanschlag (20) um die Längsachse (5) umlaufend und muffenförmig ausgebildet ist.

3. Spritzschutz (1) nach einem der vorhergehenden Ansprüche ,
**dadurch geken**n**zeichnet,** dass die Auffangrinne (36) wenigstens eine Durchgangsbohrung (17) aufweist, und dass die wenigstens eine Durchgangsbohrung (17) auf der der Pfanne oder dem Kochtopf zugewandten Seite des Spritzschutzes (30) mündet.

4. Spritzschutz (1) nach einem der vorgenannten Ansprüche,
**dadurch gekennzeichnet, dass** die kuppelförmige Schutzlippe (30) ca. 2,5cm von dem umlaufenden Rand (10) in der Längsachse (5) absteht und/oder dass die Öffnung (14) größer ist als die Kochöffnung (40).

5. Spritzschutz (1) nach einem der vorgenannten Ansprüche,
**dadurch gekennzeichnet, dass** der wenigstens eine Seitenanschlag auf einen Pfannendurchmesser von 20cm, 22cm, 24cm, 26cm, 28cm oder größer angepasst ist.

6. Spritzschutz (1) nach einem der vorgenannten Ansprüche,
**dadurch gekennzeichnet, dass** der Spritzschutz (1) ein geschlitzter Ring mit einem ersten Ende und einem zweiten Ende ist, wobei dem ersten Ende und dem zweiten Ende jeweils ein Befestigungsmittel zugeordnet ist und dass durch die Befestigungsmittel ein beliebiger Pfannendurchmesser einstellbar ist.

7. Spritzschutz (1) nach einem der vorgenannten Ansprüche,
**dadurch gekennzeichnet, dass** der Spritzschutz (1) aus Silikon, Kunststoff, Metall, Holz, Glas, Glaskeramik oder Keramik, insbesondere Steingut hergestellt ist.

8. Spritzschutz (1) nach einem der vorgenannten Ansprüche,
**dadurch gekennzeichnet, dass** der umlaufende Rand (10) und/oder der Seitenanschlag (20) aus einem ersten Werkstoff hergestellt sein kann und die Schutzlippe (30) aus einem zweiten Werkstoff.

9. Spritzschutz (1) nach Anspruch 8,
**dadurch gekennzeichnet, dass** der zweite Werkstoff ein weicherer Werkstoff ist als der erste Werkstoff.

10. Spritzschutzset (2) mit einem ersten Spritzschutz (1) und wenigstens einem zweiten Spritzschutz (1), wobei der erste Spritzschutz (1) und/oder der wenigstens eine zweite Spritzschutz (1) nach einem der vorgenannten Ansprüche ausgebildet ist, bzw. sind.

11. Spritzschutzset (2) nach Anspruch 10,
**dadurch gekennzeichnet, dass** der erste Spritzschutz (1) und der wenigstens eine zweite Spritzschutz (1) stapelbar sind.

## Claims

1. A splash guard (1) for a pan or a cooking pot, comprising:
- an edge (10) circumferentially extending around an opening (14), with at least one resting means (15) on a first side (11),
- at least one lateral stop (20) protruding from a first side (11) of the circumferentially extending edge (10) in a longitudinal axis (5), and
- a circumferentially extending protective lip (30) extending from a second side (12) from the circumferentially extending edge (10) in the longitudinal axis (5) to a cooking opening (40), wherein the circumferentially extending edge protrudes from a transitional region radially from the longitudinal axis and the protective lip and has at the protruding end a circumferentially extending edge for forming a collecting channel,
**characterized in that**
the dome-shaped protective lip (30) has at a free end (31) at least one resting groove (33), wherein the resting groove (33) is formed as a recess, in the shape of a part of a circle, at the free end of the dome-shaped protective lip (30), and **in that** the lateral stop (20) is formed in a wedge-shaped manner for centering the splash guard (1) on the pan or cooking pot.

2. The splash guard (1) according to claim 1,
**characterized in that**
the lateral stop (20) is formed from at least three individual stops (20), or that the lateral stop (20) is formed so as to circumferentially extend around the longitudinal axis (5) and in a sleeve-shaped manner.

3. The splash guard (1) according to any one of the preceding claims,
**characterized in that**
the collecting channel (36) has at least one through bore (17), and that the at least one through bore (17) runs into the side of the splash guard (30) facing towards the pan or cooking pot.

4. The splash guard (1) according to any one of the aforementioned claims,
**characterized in that**
the dome-shaped protective lip (30) protrudes approx. 2.5 cm from the circumferentially extending edge (10) in the longitudinal axis (5), and/or that the opening (14) is larger than the cooking opening (40).

5. The splash guard (1) according to any one of the aforementioned claims,
**characterized in that**
the at least one lateral stop is adapted to a pan diameter of 20 cm, 22 cm, 24 cm, 26 cm, 28 cm or greater.

6. The splash guard (1) according to any one of the aforementioned claims,
**characterized in that**
the splash guard (1) is a slotted ring with a first end and a second end, wherein one fastening means is assigned to each of the first end and the second end, and that any pan diameter can be set by means of the fastening means.

7. The splash guard (1) according to any one of the aforementioned claims,
**characterized in that**
the splash guard (1) is manufactured from silicone, plastic, metal, wood, glass, glass-ceramic or ceramic, in particular earthenware.

8. The splash guard (1) according to any one of the aforementioned claims,
**characterized in that**
the circumferentially extending edge (10) and/or the lateral stop (20) can be manufactured from a first material, and the protective lip (30) from a second material.

9. The splash guard (1) according to claim 8,
**characterized in that**
the second material is a softer material than the first material.

10. A splash guard set (2) with a first splash guard (1) and at least one second splash guard (1), wherein the first splash guard (1) and/or the at least one second splash guard (1) is/are formed in accordance with any one of the aforementioned claims.

11. The splash guard set (2) according to claim 10,
**characterized in that**
the first splash guard (1) and the at least one second splash guard (1) are stackable.

## Revendications

1. Protection anti-projections (1) pour une poêle ou une casserole comprenant:
- un bord (10) entourant une ouverture (14) et ayant au moins un appui (15) sur un premier côté (11),
- au moins une butée latérale (20) qui fait saillie d'un premier côté (11) du bord périphérique (10) dans un axe longitudinal (5), et
- une lèvre de protection périphérique (30) en forme de dôme qui s'étend depuis un deuxième côté (12) du bord périphérique (10) dans l'axe longitudinal (5) jusqu'à une ouverture de cuisson (40), dans laquelle, en partant d'une zone de transition, le bord périphérique fait saillie radialement de l'axe longitudinal et de la lèvre de protection et présente un bord périphérique à l'extrémité en saillie pour former une rigole collectrice,
**caractérisée par le fait que** la lèvre de protection (30) en forme de dôme présente au moins une cannelure d'appui (33) à une extrémité libre (31), dans laquelle ladite cannelure d'appui (33) est réalisée en tant qu'évidement en forme de cercle partiel à l'extrémité libre de la lèvre de protection (30) en forme de dôme, et **par le fait que** la butée latérale (20) est réalisée en forme de coin pour centrer la protection anti-projections (1) sur la poêle ou la casserole.

2. Protection anti-projections (1) selon la revendication 1, **caractérisée par le fait que** la butée latérale (20) est formée d'au moins trois butées individuelles (20), ou que la butée latérale (20) s'étend autour de l'axe longitudinal (5) et est en forme de manchon.

3. Protection anti-projections (1) selon l'une quelconque des revendications précédentes, **caractérisée par le fait que** la rigole collectrice (36) présente au moins un trou traversant (17), et que ledit au moins un trou traversant (17) débouche du côté de la protection anti-projections (30), qui montre vers la poêle ou la casserole.

4. Protection anti-projections (1) selon l'une quelconque des revendications susmentionnées, **caractérisée par le fait que** la lèvre de protection (30) en forme de dôme fait saillie de 2,5 cm à peu près du bord périphérique (10) dans l'axe longitudinal (5) et/ou que l'ouverture (14) est plus grande que l'ouverture de cuisson (40).

5. Protection anti-projections (1) selon l'une quelconque des revendications susmentionnées, **caractérisée par le fait que** ladite au moins une butée latérale est adaptée à un diamètre de poêle de 20 cm, 22 cm, 24 cm, 26 cm, 28 cm ou plus.

6. Protection anti-projections (1) selon l'une quelconque des revendications susmentionnées, **caractérisée par le fait que** la protection anti-projections (1) est un anneau fendu ayant une première extrémité et une deuxième extrémité, dans laquelle respectivement un moyen de fixation est associé à la première extrémité et à la deuxième extrémité et qu'un diamètre de poêle quelconque peut être réglé par les moyens de fixation.

7. Protection anti-projections (1) selon l'une quelconque des revendications susmentionnées, **caractérisée par le fait que** la protection anti-projections (1) est réalisée à partir de silicone, de matière plastique, de métal, de bois, de verre, de vitrocéramique ou de céramique, en particulier de grès.

8. Protection anti-projections (1) selon l'une quelconque des revendications susmentionnées, **caractérisée par le fait que** le bord périphérique (10) et/ou la butée latérale (20) peu(ven)t être réalisé(e)(s) à partir d'un premier matériau et la lèvre de protection (30) peut être réalisée à partir d'un deuxième matériau.

9. Protection anti-projections (1) selon la revendication 8, **caractérisée par le fait que** le deuxième matériau est un matériau plus souple que le premier matériau.

10. Ensemble de protection anti-projections (2) comprenant une première protection anti-projections (1) et au moins une deuxième protection anti-projections (1), dans lequel ladite première protection anti-projections (1) et/ou ladite au moins une deuxième protection anti-projections (1) est ou bien sont conçue(s) selon l'une quelconque des revendications susmentionnées.

11. Ensemble de protection anti-projections (2) selon la revendication 10, **caractérisé par le fait que** la première protection anti-projections (1) et ladite au moins une deuxième protection anti-projections (1) sont aptes à être empilées.
